# EUROPÄISCHE PATENTSCHRIFT

(11) **EP 0 366 929 B1**
(45) Veröffentlichungstag und Bekanntmachung des Hinweises auf die Patenterteilung: **16.06.1993**
(21) Anmeldenummer: 89117757.8
(22) Anmeldetag: 26.09.1989
(51) Int. Cl.: G09B 29/10

(54) **Magnetische Orientierungshilfe für Landkarten und dgl.**
Orienting aid for maps or the like
Aide-orientation pour cartes ou analogues

(30) Priorität: 26.09.1988 DE 8812127 U
(43) Veröffentlichungstag der Anmeldung: 09.05.1990
(73) Patentinhaber: Bruckhoff, Dieter, D-35514 Münzenberg (DE)
(72) Erfinder: Bruckhoff, Dieter, D-35514 Münzenberg (DE)
(74) Vertreter: Jochem, Bernd, Dipl.-Wirtsch.-Ing.

(56) Entgegenhaltungen:
- WO-A-86/07271
- DE-A- 3 035 615
- FR-A- 1 532 294
- US-A- 2 761 413
- US-A- 3 662 477
- US-A- 3 670 435
- US-A- 4 800 662

## Beschreibung

Die Erfindung betrifft eine magnetische Orientierungshilfe für Landkarten oder dgl.

Eine solche Orientierungshilfe ist aus der DE-OS 30 35 615 als "Markierungselement für eine dünne Materialbahn, insbesondere für Straßenkarten und Stadtpläne o. dgl." bekannt und zeichnet sich durch ein Paar von vorzugsweise trapezförmigen, jeweils eine laterale Magnetisierung sowie auf ihrer Unterseite Rippen aufweisenden Teilen aus, zwischen denen die Materialbahn angeordnet ist.

Wenngleich mit diesem bekannten Markierungselement bereits ein früherer Vorschlag zur magnetischen Karten-Ortsanzeige (DE-U 1 997 493) wesentlich vereinfacht worden ist, der aus einer großflächigen ferromagnetischen Unterlage unter der Karte und einem auf die zu markierende Kartenstelle aufzusetzenden scheibenförmigen Dauermagneten mit einem fest damit verbundenen markanten Zeiger bestand, konnte sich offensichtlich auch der jüngere Vorschlag in der Praxis nicht durchsetzen, was zum einen auf die hohen Herstellungskosten und zum anderen auf die Schwierigkeit zurückzuführen sein dürfte, die beiden lateral magnetisierten Teile mit den Polen in die erforderliche Dekkungsstellung beiderseits der Karte zu bringen.

Aufgabe der Erfindung ist demgegenüber, eine magnetische Orientierungshilfe der eingangs genannten Art dahingehend weiterzubilden, daß sie bei geringstmöglichen Herstellungskosten auch von weniger geschickten Personen leicht und zuverlässig gehandhabt werden kann und dennoch unverrückbar an der Karte arretiert ist, solange sie nicht durch äußere Gewalt in eine neue Lage gebracht oder abgenommen wird.

Erfindungsgemäß wird diese Aufgabe dadurch gelöst, daß das an der Kartenunterseite anzubringende Teil als Dauermagnet in Gestalt einer lotrecht zu ihren Stirnflächen magnetisierten Scheibe ausgebildet ist und das andere Teil ein Ring aus ferromagnetischem Material ist.

Durch die Wahl eines geeigneten Werksstoffs ist es möglich, auch dünne Scheiben aus permanent magnetischem Material als kräftige Dauermagnete mit an den Stirnflächen befindlichen Polen herzustellen. Diese sind in der Lage, einen Ring aus ferromagnetischen Material wie insbesondere Weicheisen von entsprechender Größe auch über einen Luftspalt von der Dicke des Kartenmaterials mit beträchtlicher Kraft anzuziehen und durch Reibschluß daran unverrückbar festzuhalten. Wird die dauermagnetische Scheibe unter der Karte verschoben, folgt der Ring von selbst und kann dadurch ohne besondere Geschicklichkeit an eine neue Stelle der Landkarte gebracht werden, an der er zweckmäßig den zu markierenden Ort umrahmt.

Es versteht sich von selbst, daß der Ring nicht kreisrund sein muß. Er kann auch oval sein oder die Gestalt eines Vielecks, theoretisch vom Dreieck angefangen, besitzen. Der kreisrunde Ring wird jeoch sowohl aus Gründen der Herstellung als auch der Einfachheit im Gebrauch vorzuziehen sein, zumal er keine spitzen Kanten aufweist, durch welche die Karte beschädigt werden könnte.

Darüberhinaus kann der Ring in den verschiedensten Farben lakkiert oder mit einem sonstigen Farbüberzug versehen sein, der ihn deutlicher von der Kartenoberfläche abhebt und zugleich gegen Korrosion schützt.

Analog hierzu sieht ein besonderes Ausgestaltungsmerkmal der Neuerung vor, daß die Scheibe in eine zur Karte hin offene Kunststoffbüchse eingesetzt und darin dauerhaft befestigt ist. Dadurch ergibt sich nicht nur ein Korrosionsschutz auch für die dauermagnetische Scheibe, sondern ihrer Handhabung vor allem im Winter wird wegen der Vermeidung eines unmittelbaren Kontaktes zwischen Metall und Hand angenehmer und hautsympathischer. Außerdem kann die Kunststoffbüchse zugleich als Werbeträger verwendet werden, auf der beispielsweise der Name des Kartenherstellers oder der Kartenhandlung aufgedruckt oder aufgeprägt ist, was die Orientierungshilfe besonders geeignet macht als Werbeartikel, der beim Verkauf der Karte kostenlos zugegeben wird.

An sich ist aus der US-A-3 662 477 eine Markierung mit jeweils zwei ringförmigen Magneten für Lernzwecke bekannt.

Ein Ausführungsbeispiel der Erfindung wird nachstehend anhand der Zeichnung näher erläutert. Es zeigen:
Figur 1 in perspektivischer auseinandergezogener Darstellung die einzelnen Elemente der erfindungsgemäßen Orientierungshilfe in Verbindung mit einem allseitig weggebrochenen Ausschnitt einer Landkarte und
Figur 2 in größerem Maßstab einen Axialschnitt durch die Orientierungshilfe in an der Landkarte angebrachtem Zustand.

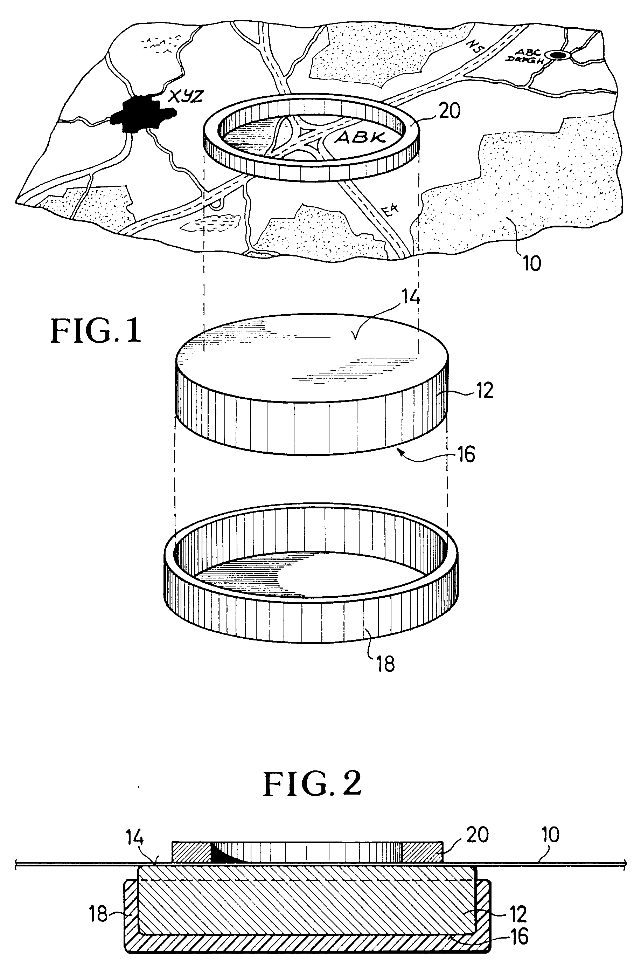

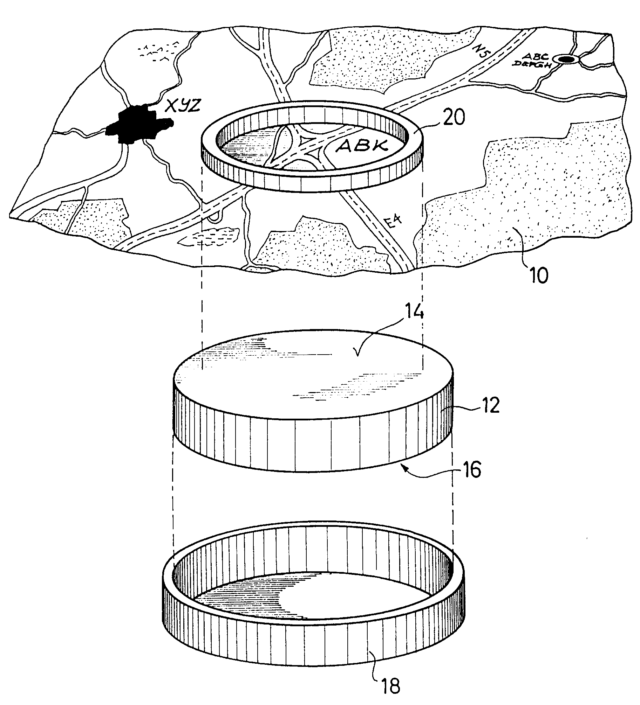

In der Zeichnung ist mit 10 ein Ausschnitt einer Landkarte, beispielsweise einer Autostraßenkarte gezeigt, die wie üblich aus kräftigem Papier besteht. Gegen die Unterseite des Kartenausschnitts 10 liegt, wie in Figur 2 dargestellt, an einer zu markierenden Stelle der Karte ein scheibenförmiger Dauermagnet 12 an, dessen obere Stirnfläche 14 den S-Pol und dessen untere Stirnfläche 16 den N-Pol oder umgekehrt bildet. Der Dauermagnet 12 ist in eine dünnwandige Büchse 18 aus Kunststoff eingesetzt und darin verklebt oder auf andere Weise dauerhaft befestigt, wobei die zur Karte weisende Stirnfläche 14 freiliegt. Auf die Oberseite des Kartenabschnitts 10 ist in Dekkung mit dem Dauermagneten 12 ein flacher Ring 20 aus Weicheisen oder einem anderen ferromagnetischen Werkstoff von vorzugsweise etwas geringerem Durchmesser als der Dauermagnet 12 aufgesetzt und wird von diesem über die einen Luftspalt im magnetischen Sinne bildende Karte angezogen. Die dadurch erzeugte Reibungskraft zwischen der Karte 10, dem Dauermagneten 12 und dem Ring 20 ist so groß, daß diese Teile auch bei gewöhnlicher Handhabung der Karte nicht verrutschen.

Soll ein anderer Ort der Karte markiert werden, genügt es, die Büchse 18 an der Unterseite der Karte zu erfassen und an dieser zu dem neuen Kartenort zu führen, wobei dieser Bewegung der Ring 20 in Folge der magnetischen Anziehung von selbst folgt und dadurch mühelos die Führung zur richtigen Stelle ermöglicht.

Wird die Karte nicht mehr benötigt, werden die Büchse 18 mit dem Dauermagneten 12 sowie der Ring abgenommen und unmittelbar gegeneinander gebracht, wodurch die Orientierungshilfe ohne Gefahr des Verlustes einer der Teile beispielsweise im Handschuhfach eines Kraftfahrzeuges abgelegt werden kann und zugleich die Aufrechterhaltung der magnetischen Wirkung in bekannter Weise sichergestellt wird.

Selbstverständlich kann die Orientierungshilfe auch an der Karte verbleiben, wenn diese zusammengefaltet und abgelegt wird, da sie praktisch nicht aufträgt und dadurch das Zusammenfalten nicht behindert.

Die Dicke der den Dauermagnet 12 bildenden Scheibe hängt vom verwendeten Material unter dem Gesichtspunkt ab, daß ein genügend starkes magnetisches Feld erzeugt wird. Auch muß die Scheibe nicht massiv ausgebildet sein, sondern kann eine zentrale Öffnung enthalten, durch die sich der magnetische Kreis zusätzlich zu schließen vermag.

## Patentansprüche

1. Magnetische Orientierungshilfe für Landkarten oder dgl., bestehend aus zwei einander magnetisch anziehenden flachen Teilen von etwa gleicher Größe, von denen das eine an der Unterseite und das andere deckungsgleich an der Oberseite der Karte an beliebiger Stelle anbringbar und daran durch den von der Anziehungskraft erzeugten Reibschluß arretierbar sind, **dadurch gekennzeichnet,** daß das an der Kartenunterseite anzubringende Teil als Dauermagnet (12) in Gestalt einer lotrecht zu ihren Stirnflächen (14,16) magnetisierten Scheibe ausgebildet ist und das andere Teil ein Ring (20) aus ferromagnetischem Material ist.

2. Orientierungshilfe nach Anspruch 1 , **dadurch gekennzeichnet,** daß der Ring (20) aus Weicheisen besteht.

3. Orientierungshilfe nach Anspruch 1 oder 2, **dadurch gekennzeichnet,** daß der Ring mit einer vorzugsweise farbigen Schutzschicht überzogen ist.

4. Orientierungshilfe nach einem der vorhergehenden Ansprüche, **dadurch gekennzeichnet,** daß die den Dauermagneten (12) bildende Scheibe in eine zur Karte hin offene Kunststoffbüchse (18) eingesetzt und darin dauerhaft befestigt ist.

## Claims

1. A magnetic orientation aid for maps and the like, comprising two flat parts of approximately the same size, which are to be magnetically attracted to one another, one of which can be applied to the underside of the map and the other one of which can be applied congruently to the upper side of the map at any position desired, and which can be retained in this position by the frictional resistance produced by the force of attraction, characterised in that the part to be applied to the underside of the map is in the form of a permanent magnet (12) in the shape of a disc magnetised perpendicular to its end faces (14, 16) and the other part is a ring (20) of ferromagnetic material.

2. An orientation aid according to Claim 1, characterised in that the ring (20) is composed of soft iron.

3. An orientation aid according to Claim 1 or Claim 2, characterised in that the ring is coated with a preferably coloured protective layer.

4. An orientation aid according to any one of the preceding Claims, characterised in that the disc forming the permanent magnet (12) is inserted in a plastics sleeve (18), which is open towards the map, and is securely fastened therein.

## Revendications

1. Aide d'orientation pour cartes, consistant en deux parties plates s'attirant l'une l'autre de façon magnétique, à environ la même grandeur, dont l'une peut être mise sur la face inférieure et l'autre en coïncidence sur la face supérieure de la carte à l'endroit voulu et qui peuvent être à cet endroit immobilisées par les forces de friction produites par les forces d'attraction, aide d'orientation caractérisée en ce que la partie à appliquer sur la face inférieure de la carte est constituée comme aimant permanent (12) sous la forme d'un disque magnétisé perpendiculairement à ses faces frontales (14, 16) et l'autre partie est un anneau (20) en matière ferromagnétique.

2. Aide-orientation selon la revendication 1, caractérisée en ce que l'anneau (20) est en fer doux.

3. Aide-orientation selon la revendication 1 ou 2, caractérisée en ce que l'anneau est revêtu d'une couche de protection de préférence colorée.

4. Aide-orientation selon l'une quelconque des revendications précédentes, caractérisée en ce que le disque constituant l'aimant permanent (12) est inséré dans un boîtier (18) en matière plastique ouvert en direction de la carte et y est fixé de façon permanente.
